# EUROPEAN PATENT APPLICATION

(11) **EP 4 404 033 A1**
(43) Date of publication of application: **24.07.2024**
(21) Application number: 22869094.7
(22) Date of filing: 07.09.2022
(51) Int. Cl.: G06F 3/023, G06F 9/451

(54) **INFORMATION DISPLAY METHOD AND APPARATUS, ELECTRONIC DEVICE, AND STORAGE MEDIUM**

(30) Priority: 14.09.2021 CN 202111072731
(71) Applicant: Vivo Mobile Communication Co., Ltd., Dongguan, Guangdong 523863 (CN)
(72) Inventor: ZHENG, Xinqi, Dongguan, Guangdong 523863 (CN)
(74) Representative: Conti, Marco
(86) International application number: PCT/CN2022/117581
(87) International publication number: WO 2023/040724

(57) **Abstract**

This application pertains to the field of computer technologies, and specifically relates to an information display method and apparatus, an electronic device, and a storage medium. The information display method includes: receiving a first string input by a user; and displaying a first candidate item in a first candidate column, and displaying a second candidate item in a second candidate column, where the first candidate item is a candidate item corresponding to the first string, and the second candidate item is a first associative candidate item that matches the first candidate item; or the first candidate item is a candidate item corresponding to a first substring in the first string, the second candidate item is a candidate item corresponding to a second substring in the first string, and the first string includes the first substring and the second substring.

## Description

### CROSS-REFERENCE TO RELATED APPLICATIONS

This application claims priority to Chinese Patent Application No. 202111072731.3, entitled "INFORMATION DISPLAY METHOD AND APPARATUS, ELECTRONIC DEVICE, AND STORAGE MEDIUM", filed on September 14, 2021, which is incorporated herein by reference in its entirety.

### TECHNICAL FIELD

This application pertains to the field of data computer technologies, and in particular, to an information display method and apparatus, an electronic device, and a storage medium.

### BACKGROUND

With rapid development of electronic devices, people can use electronic devices to chat and record, and an input method plays a very important role when electronic devices are used to chat and record. In the current input method, user operations are cumbersome and input efficiency is low.

### SUMMARY

Embodiments of this application aim to provide an information display method and apparatus, an electronic device, and a storage medium, to resolve a problem that user operations are cumbersome and input efficiency is low due to an input method in the related art.

According to a first aspect, an embodiment of this application provides an information display method. The method includes:
receiving a first string input by a user; and
displaying a first candidate item in a first candidate column, and displaying a second candidate item in a second candidate column, where
the first candidate item is a candidate item corresponding to the first string, and the second candidate item is a first associative candidate item that matches the first candidate item; or
the first candidate item is a candidate item corresponding to a first substring in the first string, the second candidate item is a candidate item corresponding to a second substring in the first string, and the first string includes the first substring and the second substring.

According to a second aspect, an embodiment of this application provides an information display apparatus. The apparatus includes:
a receiving module, configured to receive a first string input by a user; and
a display module, configured to: display a first candidate item in a first candidate column, and display a second candidate item in a second candidate column, where the first candidate item is a candidate item corresponding to the first string, and the second candidate item is a first associative candidate item that matches the first candidate item; or the first candidate item is a candidate item corresponding to a first substring in the first string, the second candidate item is a candidate item corresponding to a second substring in the first string, and the first string includes the first substring and the second substring.

According to a third aspect, an embodiment of this application provides an electronic device. The electronic device includes a processor, a memory, and a program or an instruction that is stored in the memory and that can be run on the processor, and the program or the instruction is executed by the processor to implement the steps of the information display method according to the first aspect.

According to a fourth aspect, an embodiment of this application further provides an electronic device, configured to perform the steps of the information display method according to the first aspect.

According to a fifth aspect, an embodiment of this application provides a readable storage medium. A program or an instruction is stored on the readable storage medium, and the program or the instruction is executed by a processor to implement the steps of the information display method according to the first aspect.

According to a sixth aspect, an embodiment of this application provides a computer program product. The computer program product may be executed by a processor to implement the steps of the information display method according to the first aspect.

According to a seventh aspect, an embodiment of this application provides a chip. The chip includes a processor and a communication interface, the communication interface is coupled to the processor, and the processor is configured to run a program or an instruction to implement the information display method according to the first aspect.

In the embodiments of this application, the first string input by the user is received, the first candidate item corresponding to the first string is displayed in the first candidate column, and the first associative candidate item that matches the first candidate item is displayed in the second candidate column. In this way, not only the first candidate item corresponding to the first string is provided for the user, but also the first associative candidate item that matches the first candidate item is provided for the user. Therefore, the user may directly select the first candidate item and/or the first associative candidate item from different candidate columns. Alternatively, the candidate item corresponding to the first substring in the first string may be displayed in the first candidate column, and the candidate item corresponding to the second substring in the first string may be displayed in the second candidate column. In this way, candidate items corresponding to the first string can be separately displayed in a plurality of candidate columns, more candidate items are displayed, and more candidate items are provided for the user, so that the user can directly select a required candidate item from the plurality of candidate columns. According to the solution in the embodiments of this application, more candidate items can be displayed in a simple operation manner, and an associative candidate item corresponding to a candidate item can be further displayed, so that more candidate options are provided for the user, thereby improving input efficiency of the user.

### BRIEF DESCRIPTION OF DRAWING

To describe the technical solutions in embodiments of this application or in the related art more clearly, the following briefly describes the accompanying drawings required for describing the embodiments or the related art. Apparently, the accompanying drawings in the following description show merely some embodiments of this application, and a person of ordinary skill in the art may still derive other drawings from these accompanying drawings without creative efforts.
FIG. 1 is a first flowchart of an information display method according to an example embodiment;
FIG. 2 is a first schematic diagram of a display interface according to an example embodiment;
FIG. 3 is a second schematic diagram of a display interface according to an example embodiment;
FIG. 4 is a third schematic diagram of a display interface according to an example embodiment;
FIG. 5 is a fourth schematic diagram of a display interface according to an example embodiment;
FIG. 6 is a fifth schematic diagram of a display interface according to an example embodiment;
FIG. 7 is a sixth schematic diagram of a display interface according to an example embodiment;
FIG. 8 is a seventh schematic diagram of a display interface according to an example embodiment;
FIG. 9 is an eighth schematic diagram of a display interface according to an example embodiment;
FIG. 10 is a ninth schematic diagram of a display interface according to an example embodiment;
FIG. 11 is a tenth schematic diagram of a display interface according to an example embodiment;
FIG. 12 is an eleventh schematic diagram of a display interface according to an example embodiment;
FIG. 13 is a twelfth schematic diagram of a display interface according to an example embodiment;
FIG. 14 is a second flowchart of an information display method according to an example embodiment;
FIG. 15 is a third flowchart of an information display method according to an example embodiment;
FIG. 16 is a structural block diagram of an information display apparatus according to an example embodiment;
FIG. 17 is a structural block diagram of an electronic device according to an example embodiment; and
FIG. 18 is a schematic diagram of a hardware structure of an electronic device according to an embodiment of this application.

### DESCRIPTION OF EMBODIMENTS

The following describes in detail features and example embodiments of various aspects of this application. To make purposes, technical solutions, and advantages of this application clearer, the following further describes this application in detail with reference to the accompanying drawings and specific embodiments. It should be understood that the specific embodiments described herein are merely intended to explain this application, but are not intended to limit this application. For a person skilled in the art, this application may be implemented without requiring some details in these specific details. The following descriptions of the embodiments are merely intended to provide a better understanding of this application by using examples shown in this application.

It should be noted that in this specification, relational terms such as first and second are only used to distinguish one entity or operation from another, and do not necessarily require or imply that any actual relationship or sequence exists between these entities or operations. In addition, the terms "include", "contain", or their any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the presence of additional identical elements in the process, method, article, or device that includes the element.

Just like the background, in the related art, in the current input method, after a user inputs a string, there is only one candidate column, and a candidate item corresponding to the input string may be presented in the candidate column. Only after the user taps a candidate item in the candidate column and inputs the candidate item into an information sending box, an associative candidate item associated with the candidate item that is input into the information sending box may appear in the candidate column in which the candidate item is originally displayed. The user may tap the associative candidate item again to determine a word to be sent by the user. In the current input method, only one candidate column appears, and only after the user taps the candidate item in the candidate column, the associative candidate item corresponding to the candidate item that is input into the information sending box appears, instead of directly appearing the associative candidate item associated with the candidate item corresponding to the input string. As a result, an associative candidate item cannot be provided for the user for prediction, resulting in cumbersome user operations and low input efficiency.

For the problem in the related art, the embodiments of this application provide an information display method. A first string input by a user is received, a first candidate item corresponding to the first string is displayed in a first candidate column, and a first associative candidate item that matches the first candidate item is displayed in a second candidate column. In this way, not only the first candidate item corresponding to the first string is provided for the user, but also the first associative candidate item that matches the first candidate item is provided for the user. Therefore, the user may directly select the first candidate item and/or the first associative candidate item from different candidate columns. Alternatively, a candidate item corresponding to a first substring in the first string may be displayed in a first candidate column, and a candidate item corresponding to a second substring in the first string may be displayed in a second candidate column. In this way, candidate items corresponding to the first string can be separately displayed in a plurality of candidate columns, more candidate items are displayed, and more candidate items are provided for the user, so that the user can directly select a required candidate item from the plurality of candidate columns. According to the solution in the embodiments of this application, more candidate items can be displayed in a simple operation manner, and an associative candidate item corresponding to a candidate item can be further displayed, so that more candidate options are provided for the user, thereby improving input efficiency of the user.

With reference to the accompanying drawings, the following describes in detail the information display method provided in the embodiments of this application by using specific embodiments and application scenes thereof.

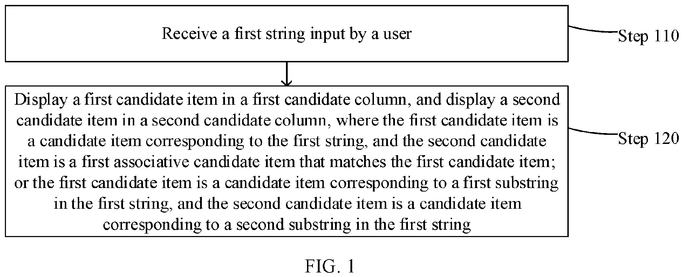

FIG. 1 is a schematic flowchart of an information display method according to an embodiment of this application. The information display method may be executed by an electronic device or a server. It should be noted that the foregoing execution body does not constitute a limitation on this application.

In some embodiments of this application, the electronic device may be but is not limited to a personal computer (Personal Computer, PC), a smartphone, a tablet computer, a personal digital assistant (Personal Digital Assistant, PDA), or the like.

As shown in FIG. 1, the information processing method provided in this embodiment of this application may include step 110 and step 120.

Step 110: Receive a first string input by a user.

Step 120: Display a first candidate item in a first candidate column, and display a second candidate item in a second candidate column, where the first candidate item is a candidate item corresponding to the first string, and the second candidate item is a first associative candidate item that matches the first candidate item; or the first candidate item is a candidate item corresponding to a first substring in the first string, and the second candidate item is a candidate item corresponding to a second substring in the first string.

The first string may include the first substring and the second substring.

The following describes in detail the information display method provided in this embodiment of this application.

First, step 110 is described. The first string input by the user is received.

The first string may be a string input by the user on an input method interface.

In some embodiments of this application, the first string may be but is not limited to any one of the following types of strings: a Chinese Pinyin string, an English letter string, or a string in another possible input method solution. A specific type of the first string may be set according to a user requirement, and is not limited herein.

In some embodiments of this application, in a case that the first string is a Chinese Pinyin string, the Chinese Pinyin string may be but is not limited to a full Pinyin string, a simple Pinyin string, a fuzzy tone string, or a custom string. This may be specifically set according to a user requirement, and is not limited herein.

In some embodiments of this application, an input method keyboard corresponding to the input method interface may be of different types. This may be specifically determined according to an actual situation, and is not limited herein.

In an example, the input keyboard corresponding to the input method interface may be a 9-key keyboard, or may be a 26-key keyboard.

Next, step 120 is described. The first candidate item is displayed in the first candidate column, and the second candidate item is displayed in the second candidate column, where the first candidate item is the candidate item corresponding to the first string, and the second candidate item is the first associative candidate item that matches the first candidate item; or the first candidate item is the candidate item corresponding to the first substring in the first string, and the second candidate item is the candidate item corresponding to the second substring in the first string.

The first candidate column may be a preset candidate column.

The second candidate column may be another preset candidate column that is different from the first candidate column.

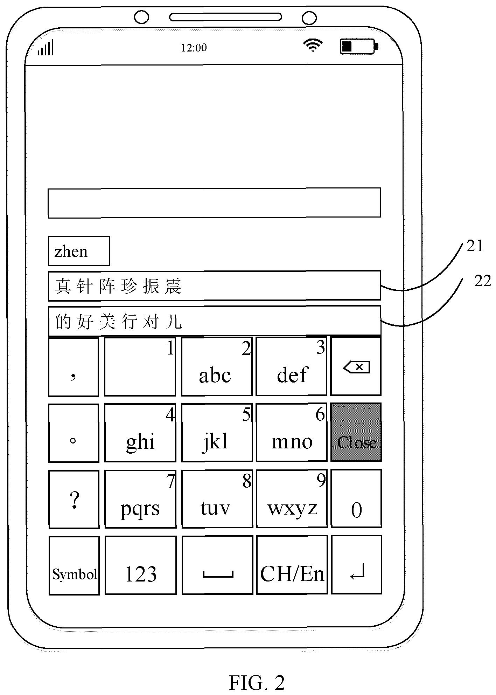

In an example, as shown in FIG. 2, the input method keyboard corresponding to the input method interface is a 9-key keyboard, the first candidate column may be an area 21 in FIG. 2, and the second candidate column may be an area 22 in FIG. 2.

It can be understood that the first candidate item may be a candidate item displayed in the first candidate column, and the second candidate item may be a candidate item displayed in the second candidate column.

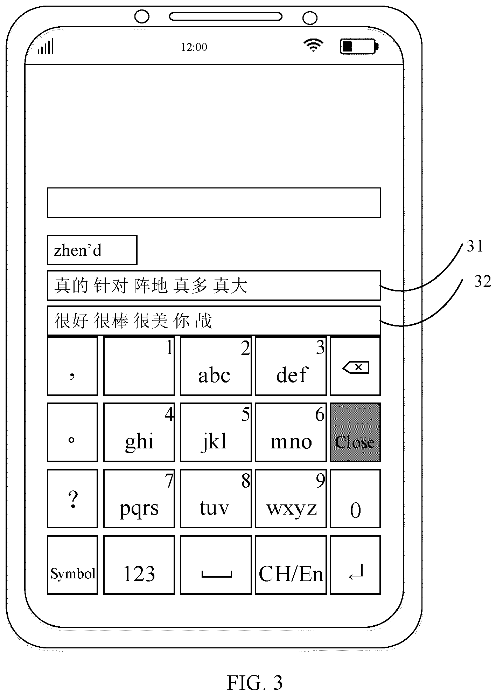

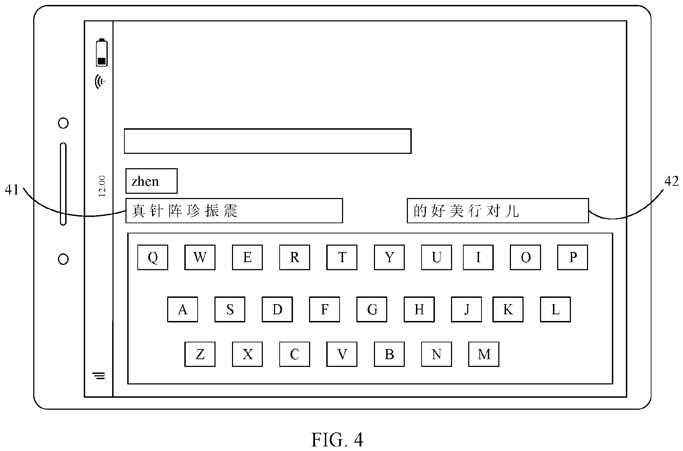

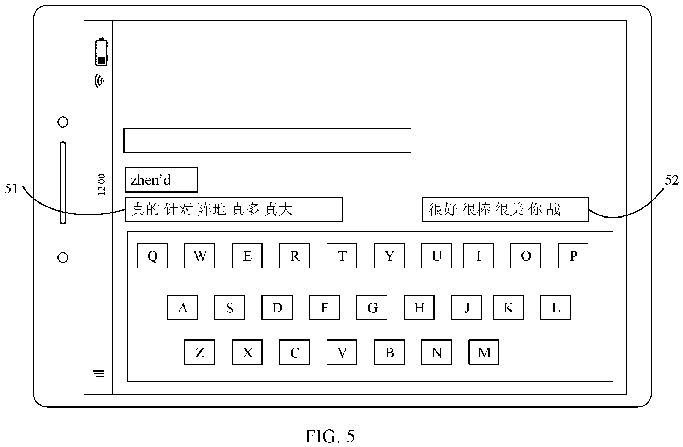

In some embodiments of this application, the input method interface may be displayed on a screen in a portrait orientation (as shown in FIG. 2 and FIG. 3), or may be displayed on a screen in a landscape orientation (as shown in FIG. 4 and FIG. 5). The first candidate column and the second candidate column are arranged in a first direction in a case that the input method interface is displayed on the screen in a portrait orientation; and the first candidate column and the second candidate column are arranged in a second direction in a case that the input method interface is displayed on the screen in a landscape orientation.

The first direction may be a preset direction, and the second direction may be another preset direction.

It can be understood that, when the interface is displayed on the screen in a landscape orientation, horizontal space is more sufficient, and when interface is displayed on the screen in a portrait orientation, vertical space is more sufficient.

Therefore, for example, being arranged in the first direction may be being arranged in a vertical direction, and being arranged in the second direction may be being arranged in a horizontal direction. As shown in FIG. 2, a first candidate column 21 and a second candidate column 22 are arranged on the screen in a vertical direction. As shown in FIG. 4, a first candidate column 41 and a second candidate column 42 are arranged on the screen in a horizontal direction.

In this embodiment of this application, the first candidate column and the second candidate column are arranged in different manners according to a display state of the display screen. In this way, a layout of the first candidate column and the second candidate column matches the display state of the display screen of the electronic device more, so that the user can watch and operate an input keyboard, thereby improving user experience.

In some embodiments of this application, after the first string input by the user is received, there may be two display manners, which are specifically as follows:
(1) Display the candidate item corresponding to the first string in the first candidate column, and display the first associative candidate item that matches the first candidate item in the second candidate column.

In some embodiments of this application, the candidate item corresponding to the first string may be a candidate word corresponding to the first string.

In some embodiments of this application, the first associative candidate item may be an associative word or an associative symbol of the first candidate item.

In an example, as shown in FIG. 2, when the user inputs a first string "zhen" on the input method interface, first candidate items " 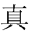 " (zhe̅n), " 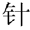 " (zhe̅n), " 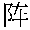 " (zhèn), " 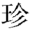 " (zhe̅n), " 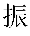 " (zhèn), and " 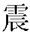 " (zhèn) corresponding to the first string "zhen" may be displayed in a first candidate column 21, and first associative candidate items corresponding to the first candidate items displayed in the first candidate column 21 may be displayed in a second candidate column 22. Specifically, the first associative candidate items may be candidate words such as " 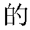 " (de), " 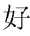 " (hǎo), " 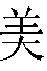 " (měi), " 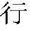 " (xing), " 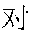 " (dui), and " 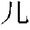 " (ér) corresponding to the first candidate items.

In another example, as shown in FIG. 3, when the user inputs a first string "zhend" on the input method interface, first candidate items " 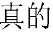 " (zhe̅n de), " 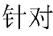 " (zhe̅n dui), " 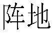 " (zhèn di), " 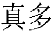 " (zhe̅n duo̅), and " 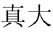 " (zhe̅n dà) corresponding to the first string "zhen'd" may be displayed in a first candidate column 31, and first associative candidate items corresponding to the first candidate items displayed in the first candidate column 31 may be displayed in a second candidate column 32. Specifically, the first associative candidate items may be candidate words such as " 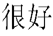 " (hěn hǎo), " 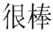 " (hěn bàng), " 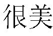 " (hěn měi), " 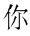 " (nǐ), and " 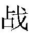 " (zhàn) corresponding to the first candidate items.

In another example, when the user inputs a first string "zhendehh" on the input method interface, first candidate items " 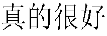 " (zhe̅n de hěn hǎo), " 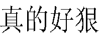 " (zhe̅n de hǎo hěn), " 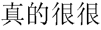 " (zhe̅n de hěn hěn), and " 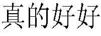 " (zhe̅n de hǎo hǎo) corresponding to the first string "zhendehh" may be displayed in the first candidate column, and first associative candidate items corresponding to the first candidate items displayed in the first candidate column may be displayed in the second candidate column. Specifically, the first associative candidate items may be candidate symbols such as "*", "!", "~", and "#" corresponding to the first candidate items.

(2) Display the candidate item corresponding to the first substring in the first string in the first candidate column, and display the candidate item corresponding to the second substring in the first string in the second candidate column.

The first string may include the first substring and the second substring.

The first substring may be a part of the first string, and the second substring may be a part of the first string except the first substring.

In an example, if the first string is "zhendehaobang", the first substring may be a string "zhende", and the second substring may be a string "haobang".

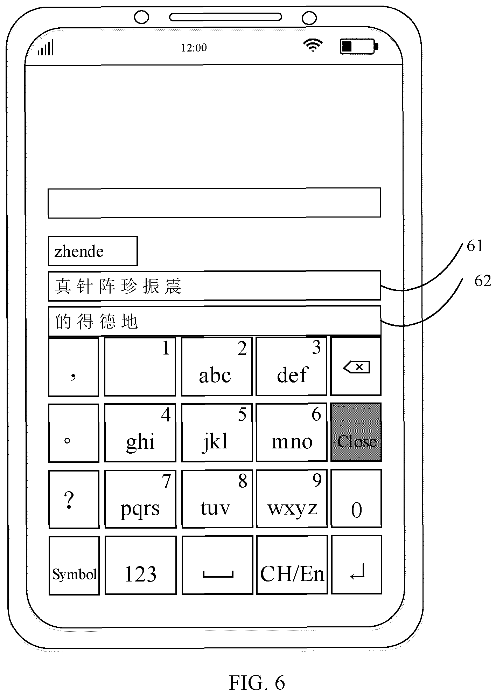

Referring to the foregoing example, as shown in FIG. 6, when the user inputs the first string "zhende", the first substring may be a string "zhen", and the second substring may be a string "de". Candidate items " 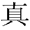 " (zhe̅n), " 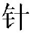 " (zhe̅n), " 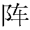 " (zhèn), " 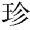 " (zhe̅n), " 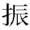 " (zhèn), and " 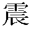 " (zhèn) corresponding to the first substring "zhen" are displayed in the first candidate column, and candidate items " 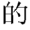 " (de), " 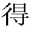 " (dé), " 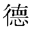 " (dé), and " 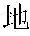 " (de) corresponding to the second substring "de" are displayed in the second candidate column.

In this embodiment of this application, the first string input by the user is received, the first candidate item corresponding to the first string is displayed in the first candidate column, and the first associative candidate item that matches the first candidate item is displayed in the second candidate column. In this way, not only the first candidate item corresponding to the first string is provided for the user, but also the first associative candidate item that matches the first candidate item is provided for the user. Therefore, the user may directly select the first candidate item and/or the first associative candidate item from different candidate columns. Alternatively, the candidate item corresponding to the first substring in the first string may be displayed in the first candidate column, and the candidate item corresponding to the second substring in the first string may be displayed in the second candidate column. In this way, candidate items corresponding to the first string can be separately displayed in a plurality of candidate columns, more candidate items are displayed, and more candidate items are provided for the user, so that the user can directly select a required candidate item from the plurality of candidate columns. According to the solution in this embodiment of this application, more candidate items can be displayed in a simple operation manner, and an associative candidate item corresponding to a candidate item can be further displayed, so that more candidate options are provided for the user, thereby improving input efficiency of the user.

In some embodiments of this application, after the first string input by the user is received, there may be two display cases. Specifically, the two cases may be as follows:
(1) In a case that the first string does not include a preset segmentation symbol, the first candidate item is the candidate item corresponding to the first string, and the second candidate item is the first associative candidate item that matches the first candidate item.
(2) In a case that the first string includes a preset segmentation symbol, the first candidate item is the candidate item corresponding to the first substring in the first string, and the second candidate item is the candidate item corresponding to the second substring in the first string.

The preset segmentation symbol may be a symbol that is preset in the first string and that is used to segment the first string into at least two substrings.

In one example, the preset segmentation symbol may be but is not limited to ";", "'", ",", or the like. This may be specifically set according to a user requirement, and is not limited herein.

In some embodiments of this application, the first substring may be a string before a preset segmentation symbol at a preset location in the first string, and the second substring may be a string after the preset segmentation symbol at the preset location. The preset location may be a location that is preset.

In an example, the first string is "zhen'de'hao'bang", and the preset location may be a location of any one of three preset segmentation symbols "'" If the preset location is a location of a first segmentation symbol, the first substring may be a string "zhen", and the second substring may be a string "dehaobang".

In this embodiment of this application, a candidate items in the first candidate column and a candidate item in the second candidate column are separately displayed based on whether the first string includes a preset segmentation symbol, so that display of a candidate item is more in line with an operation habit of the user, thereby improving user experience.In some embodiments of this application, in a case that there is one preset segmentation symbol, the first substring is a string before the preset segmentation symbol, and the second substring is a string after the preset segmentation symbol. Correspondingly, the candidate item corresponding to the first substring is displayed in the first candidate column, and the candidate item corresponding to the second substring is displayed in the second candidate column.

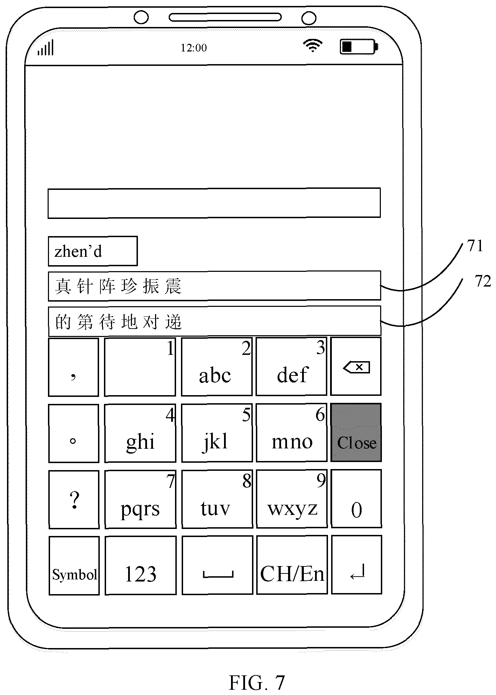

In an example, as shown in FIG. 7, when the user inputs a first string "zhen'd" on the input method interface, because the first string input by the user includes a preset segmentation symbol "'", first candidate items " 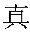 " (zhe̅n), " 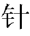 " (zhe̅n), " 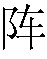 " (zhèn), " 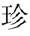 " (zhe̅n), " 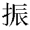 " (zhèn), and " 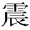 " (zhèn) corresponding to a string "zhen" before a last preset segmentation symbol may be displayed in a first candidate column 71, and second candidate items " 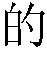 " (de), " 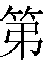 " (di), " 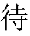 " (dài), " 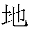 " (di), " 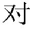 " (dui), and " 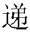 " (di) corresponding to a string "d" after the last preset segmentation symbol is displayed in a second candidate column 72.

In some embodiments of this application, in a case that there are M preset segmentation symbols, M is a positive integer greater than 1, the first candidate item is displayed in the first candidate column, and the second candidate item is displayed in the second candidate column. Specifically, the following may be included:
displaying the first candidate item in the first candidate column, and separately displaying second candidate item in M sub-candidate columns.

The first candidate item may be a candidate item corresponding to a string before the first one of the preset segmentation symbols in the first string.

The second candidate column may include the M sub-candidate columns, and a candidate item corresponding to a string between two adjacent preset segmentation symbols is displayed in each sub-candidate column.

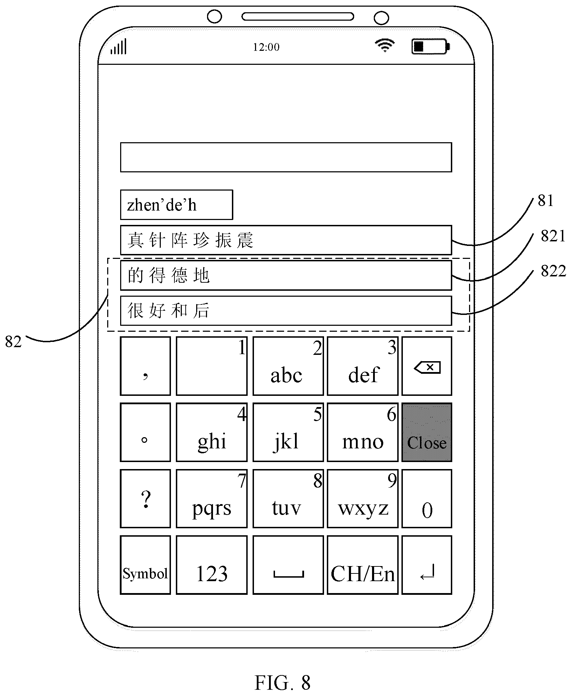

In an example, as shown in FIG. 8, when the user inputs a first string "zhen'de'h" on the input method interface, the first string input by the user includes a preset segmentation symbol "'", there are two preset segmentation symbols, and a second candidate column 82 may include two sub-candidate columns: a sub-candidate column 821 and a sub-candidate column 822. Therefore, the first candidate items " 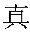 " (zhe̅n), " 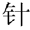 " (zhe̅n), " 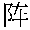 " (zhèn), "3^" (zhe̅n), " 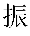 " (zhèn), and " 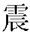 " (zhèn) corresponding to a string "zhen" before the first one of the preset segmentation symbol in the first string may be displayed in a first candidate column 81, candidate items " 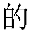 " (de), " 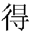 " (dé), " 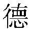 " (dé), and " 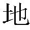 " (de) corresponding to a substring "de" between the first one of the preset segmentation symbols and the second one of the preset segmentation symbols may be displayed in the sub-candidate column 821, and candidate items " 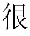 " (hěn), " 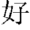 " (hǎo), " 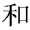 " (hé), and " 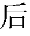 " (hòu) corresponding to a string "h" after the last one of the preset segmentation symbols may be displayed in the sub-candidate column 822.

It can be understood that a combination of the sub-candidate column 821 and the sub-candidate column 822 may be considered as the second candidate column 82.

It should be noted that, in a case that the first string input by the user includes a preset segmentation symbol, if there are a plurality of preset segmentation symbols, the preset segmentation symbols may be the same or may be different. For example, the first string input by the user on the input method interface may be "zhen'de'h", or may be "zhen'de;h". Specifically, in a case that there are a plurality of preset segmentation symbols, whether the preset segmentation symbols are the same may be set according to a user requirement, and is not limited herein.

It should be noted that, in the foregoing examples in FIG. 7 and FIG. 8, an example in which the input method keyboard corresponding to the input method interface is a 9-key keyboard in vertical sorting is used for description. A person skilled in the art should know that in a case that the display screen is displayed horizontally, the input method keyboard corresponding to the input method interface may be alternatively a 26-key keyboard or a 9-key keyboard, and the first candidate column and the second candidate column are horizontally arranged for display. For details, refer to FIG. 4 and FIG. 5. Details are not described herein.

It should be noted that, in the following embodiments of this application, an example in which the input method keyboard corresponding to the input method interface is a 9-key keyboard in vertical arrangement is used for description. Horizontal arrangement and vertical arrangement are only different layout manners of the first candidate column and the second candidate column. Another implementation of the information display method is the same. An implementation of a 26-key keyboard is the same as that of the 9-key keyboard, except that one is a 9-key keyboard and the other is a 26-key keyboard. Details are not described in the following embodiments.

In this embodiment of this application, a candidate item displayed in the second candidate column is determined according to a quantity of preset segmentation symbols. In a case that the quantity of preset segmentation symbols is relatively large, a plurality of sub-candidate columns are displayed in the second candidate column, so that a character corresponding to a string between each two segmentation symbols can be operated separately, and accuracy of selecting each character in a long string is higher, thereby further improving user experience.

In some embodiments of this application, to display a candidate item more accurately, step 120 may specifically include:
displaying a plurality of first candidate items in the first candidate column and displaying a plurality of second candidate items in the second candidate column according to a weight level.

In an example, when the user inputs a first string "zhen" on the input method interface, candidate items corresponding to the first string "zhen" may include " 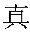 " (zhe̅n), " 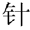 " (zhe̅n), " 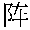 " (zhèn), " 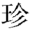 " (zhe̅n), " 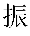 " (zhèn), " 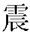 " (zhèn), " 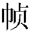 " (zhe̅n), " 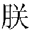 " (zhèn), and " 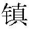 " (zhèn), where a weight level of " 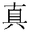 " (zhe̅n) corresponding to the first string "zhen" may be 0.98, a weight of " 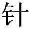 " (zhe̅n) corresponding to the first string "zhen" may be 0.95, a weight level of " 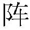 " (zhèn) corresponding to the first string "zhen" may be 0.8, a weight level of "3^" (zhe̅n) corresponding to the first string "zhen" may be 0.7, a weight level of " 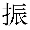 " (zhèn) corresponding to the first string "zhen" may be 0.6, a weight level of "M" (zhèn) corresponding to the first string "zhen" may be 0.5, a weight level of " 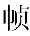 " (zhe̅n) corresponding to the first string "zhen" may be 0.4, a weight level of " 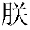 " (zhèn) corresponding to the first string "zhen" may be 0.3, and a weight level of " 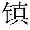 " (zhèn) corresponding to the first string "zhen" may be 0.2. Therefore, according to the weight levels of the foregoing candidate item, display may be performed in a descending order of the weight levels, that is, a display result in the first candidate column shown in FIG. 2.

Referring to the foregoing example, in a case that the first candidate items corresponding to "zhen" are displayed in the first candidate column, first associative candidate items corresponding to the first candidate items may be displayed in the second candidate column. For example, the first associative candidate items corresponding to the first candidate items may include " 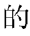 " (de), " 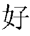 " (hǎo), " 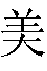 " (měi), " 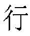 " (xing), " 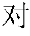 " (dui), " 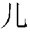 " (ér), " 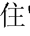 " (zhù), " 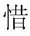 " (xi̅), and " 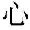 " (xi̅n). Because the first associative candidate items displayed in the second candidate column correspond to the first candidate items displayed in the first candidate column, " 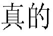 " (zhe̅n de), " 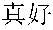 " (zhe̅n hǎo), "Mil" (zhe̅n měi), " 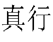 " (zhe̅n xing), " 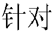 " (zhe̅n dui), " 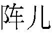 " (zhèn ér), " 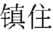 " (zhèn zhù), " 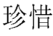 " (zhe̅n xi̅), and " 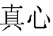 " (zhe̅n xi̅n) may be obtained through combination, where a weight level corresponding to " 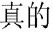 " (zhe̅n de) may be 0.98, a weight level corresponding to " 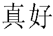 " (zhe̅n hǎo) may be 0.94, a weight level corresponding to " 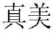 " (zhe̅n měi) may be 0.85, a weight level corresponding to " 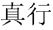 " (zhe̅n xíng) may be 0.8, a weight level corresponding to " 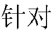 " (zhe̅n dui) may be 0.7, a weight level corresponding to " 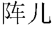 " (zhèn ér) may be 0.6, a weight level corresponding to " 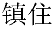 " (zhèn zhù) may be 0.5, a weight level corresponding to " 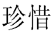 " (zhe̅n xi̅) may be 0.4, and a weight level corresponding to " 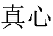 " (zhe̅n xi̅n) may be 0.3. Therefore, according to the weight levels of the foregoing candidate items, the first associative candidate items corresponding to the first candidate items may be displayed in the second candidate column in descending order of the weight levels, that is, a display result in the second candidate column shown in FIG. 2.

It should be noted that, in the foregoing example, the weight level is used to display candidate items in the first candidate column and the second candidate column. A person skilled in the art should know that the candidate items may be displayed in the first candidate column and the second candidate column in another manner. For example, the candidate items may be displayed according to historical input records of the user. For example, if candidate words selected by the user may include " 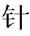 " (zhe̅n), " 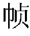 " (zhe̅n), and " 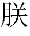 " (zhèn) when the user inputs "zhen", " 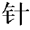 " (zhe̅n), " 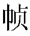 " (zhe̅n), and " 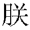 " (zhèn) may be displayed in the first candidate column. When " 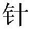 " (zhe̅n), " 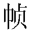 " (zhe̅n), and " 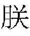 " (zhèn) are displayed, sorting may be performed according to time points at which the user selects these candidate words. For example, a candidate word most recently selected by the user is " 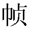 " (zhe̅n), a candidate word selected just before that is " 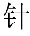 " (zhe̅n), and a candidate word selected two times before that is " 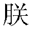 " (zhèn). When the candidate words are displayed in the first candidate column, a display sequence is " 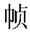 " (zhe̅n) - " 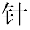 " (zhe̅n) - " 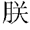 " (zhèn), that is, " 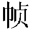 " (zhe̅n) appears first in the first candidate column, and " 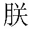 " (zhèn) appears last in the first candidate column.

In this embodiment of this application, the first candidate item is displayed in the first candidate column and the second candidate item is displayed in the second candidate column according to the weight level, so that candidate items displayed in the first candidate column and the second candidate column are more accurate.

In some embodiments of this application, as shown in FIG. 2 to FIG. 8, candidate words displayed in the first candidate column and the second candidate column are limited, that is, the candidate words cannot be fully displayed in the first candidate column and the second candidate column. To display more candidate words for selection by the user, after step 120, the information display method may further include:
receiving a fourth input performed by the user on a target candidate column; and
displaying a fifth candidate item in the target candidate column in response to the fourth input, where
the target candidate column may be the first candidate column or the second candidate column.

The fourth input may be performed to display the fifth candidate item in the target candidate column. The fourth input may be but is not limited to a touch input, a voice input, a gesture input, or another possible input, or may be a combination of at least two of the foregoing inputs. This is not limited herein.

In some embodiments of this application, in a case that the fourth input is a touch input, the fourth input may be specifically but is not limited to a tap input, a double-tap input, a slide input, or a fill-in input in the target candidate column, or may be a combination of at least two of the foregoing inputs. This is not limited herein.

The fifth candidate item may be a candidate item that is not completely the same as the first candidate item or the second candidate item.

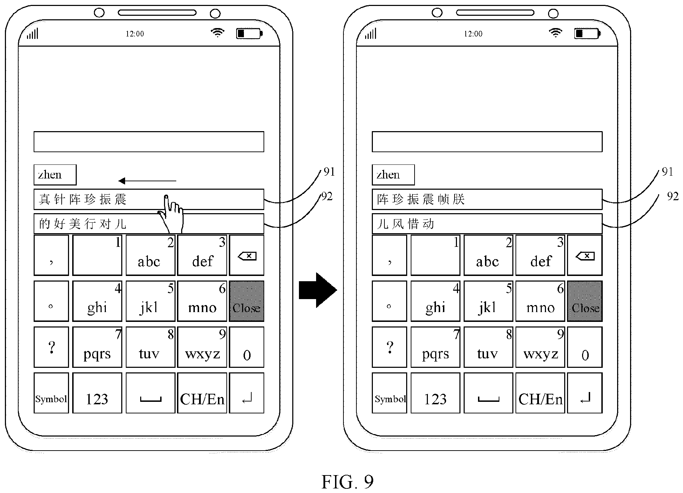

In an example, as shown in FIG. 9, when the user inputs a first string "zhen" on the input method interface, first candidate items " 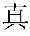 " (zhe̅n), " 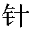 " (zhe̅n), " 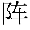 " (zhèn), " 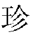 " (zhe̅n), " 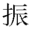 " (zhèn), and " 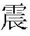 " (zhèn) corresponding to "zhen" are displayed in a first candidate column 91. When the user performs leftward sliding on the first candidate column, fifth candidate items " 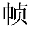 " (zhe̅n) and " 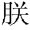 " (zhèn) are displayed in the first candidate column. Further, associative candidate items displayed in a corresponding second candidate column are correspondingly updated. As shown in FIG. 9, when candidate items " 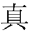 " (zhe̅n), " 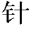 " (zhe̅n), " 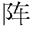 " (zhèn), " 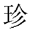 " (zhe̅n), " 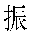 " (zhèn), and " 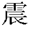 " (zhèn) displayed in the first candidate column are changed into " 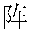 " (zhèn), " 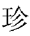 " (zhe̅n), " 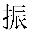 " (zhèn), and " 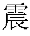 " (zhèn), " 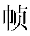 " (zhe̅n), and " 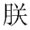 " (zhèn), associative candidate items " 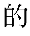 " (de), " 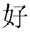 " (hǎo), " 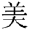 " (měi), " 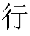 " (xíng), " 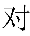 " (dui), and " 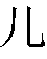 " (ér) displayed in the second candidate column are correspondingly changed to " 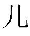 " (ér), " 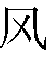 " (feng), " 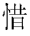 " (xi̅), and " 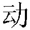 " (dòng).

In this embodiment of this application, the fourth input performed by the user on the target candidate column is received, and the fifth candidate item is displayed in the target candidate column in response to the fourth input. In this way, more candidate items may be displayed for selection by the user. Further, after a candidate item in the target candidate column is adjusted, a candidate item in another candidate column other than the target candidate column is correspondingly adjusted, thereby improving user experience.

In some embodiments of this application, to further facilitate user operation and improve user experience, after step 120, the information display method may further include:
receiving a first input performed by the user on a first target candidate item in the second candidate column; and
in response to the first input, displaying a third candidate item in the first candidate column, and displaying a second associative candidate item corresponding to the third candidate item in the second candidate column.

The first target candidate item may be one of a plurality of second candidate items in the second candidate column. For example, the first target candidate item may be one of a plurality of second candidate items in FIG. 2 to FIG. 9.

The first input may be performed to display the third candidate item in the first candidate column, and display the second associative candidate item corresponding to the third candidate item in the second candidate column. The first input may be but is not limited to a touch input, a voice input, a gesture input, or another possible input, or may be a combination of at least two of the foregoing inputs. This is not limited herein.

In some embodiments of this application, in a case that the first input is a touch input, the first input may be specifically but is not limited to a tap input, a double-tap input, a slide input, or a fill-in input on the first target candidate item in the second candidate column, or may be a combination of at least two of the foregoing inputs. This is not limited herein.

The third candidate item may be a candidate item formed by combining the first target candidate item with the first candidate item.

In this embodiment of this application, the first input performed by the user on the first target candidate item in the second candidate column is received, and in response to the first input, the third candidate item is displayed in the first candidate column, and the second associative candidate item corresponding to the third candidate item is displayed in the second candidate column. In this way, through the first input performed by the user on the first target candidate item, the first target candidate item may be combined with the first candidate item in the first candidate column to obtain the third candidate item. Therefore, when selecting candidate items, the user does not need to select the first candidate item in the first candidate column and then select the second candidate item in the second candidate column one by one, so that operations are simple, thereby improving input efficiency of the user.

In some embodiments of this application, in a case that the first input is a select input, the receiving a first input performed by the user on a first target candidate item in the second candidate column may include:
receiving a select input performed by the user on the first target candidate item in the second candidate column; and
the displaying a third candidate item in the first candidate column in response to the first input may include:
   displaying, in the first candidate column in response to the select input, a candidate item formed by combining the first target candidate item with the first one of the first candidate items; or
   displaying, in the first candidate column in response to the select input, a candidate item formed by combining the first target candidate item with each of the first candidate items.

The select input may be an input for selecting the first target candidate item, for example, may be a tap input.

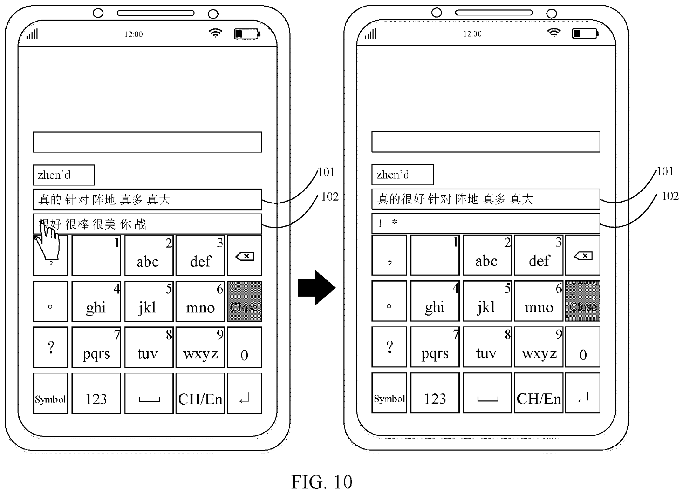

In some embodiments of this application, after the select input performed by the user on the first target candidate item in the second candidate column, in response to the select input, there may be the following two display cases:
(i) Display, in the first candidate column, a candidate item formed by combining the first target candidate item with the first one of the first candidate item.
   In an example, as shown in FIG. 10, when the user inputs a first string "zhend" on the input method interface, because the first string input by the user does not include a preset segmentation symbol, first candidate items " 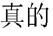 " (zhe̅n de), " 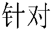 " (zhe̅n dui), " 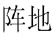 " (zhèn di), " 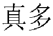 " (zhe̅n duo̅), and " 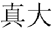 " (zhe̅n dà) corresponding to the first string may be displayed on a first candidate column 101, and first associative candidate items such as " 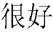 " (hěn hǎo), " 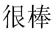 " (hěn bàng), " 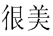 " (hěn měi), " 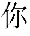 " (nǐ), and " 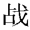 " (zhàn) corresponding to the first candidate items are displayed in a second candidate column 102. When the user taps " 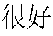 " (hěn hǎo) (that is, the first target candidate item) in the second candidate column, " 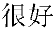 " (hěn hǎo) tapped by the user may be combined with the first one of the first candidate item " 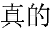 " (zhe̅n de) in the first candidate column, to form " 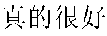 " (zhe̅n de hěn hǎo) (the third candidate item).
(ii) Display, in the first candidate column, a candidate item formed by combining the first target candidate item with each first candidate item.

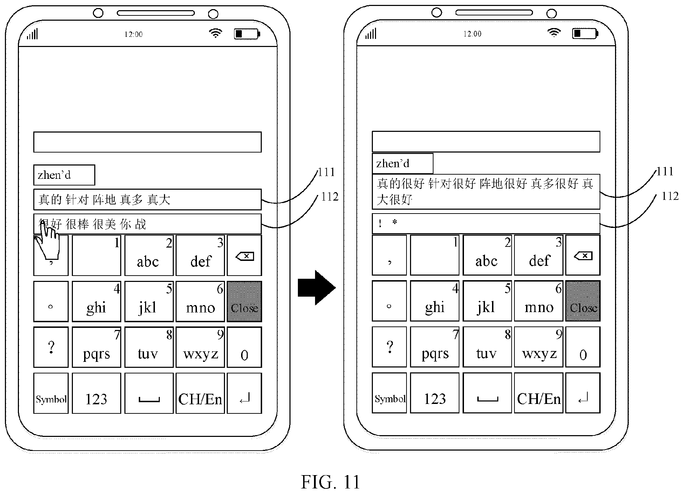

In an example, as shown in FIG. 11, the input method keyboard corresponding to the input method interface is a 9-key keyboard, and a layout manner is vertical sorting. When the user inputs a first string "zhend" on the input method interface, because the first string input by the user does not include a preset segmentation symbol, first candidate items " 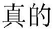 " (zhe̅n de), " 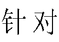 " (zhe̅n dui), " 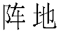 " (zhèn di), " 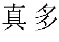 " (zhe̅n duo̅), and " 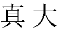 " (zhe̅n dà) corresponding to the first string may be displayed in a first candidate column 111, and first associative candidate items such as " 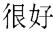 " (hěn hǎo), " 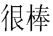 " (hěn bàng), " 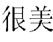 " (hěn měi), " 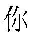 " (nǐ), and " 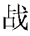 " (zhàn) corresponding to the first candidate items are displayed in a second candidate column 112. When the user taps " 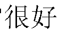 " (hěn hǎo) (that is, the first target candidate item) in the second candidate column, " 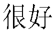 " (hěn hǎo) tapped by the user is combined with each first candidate item in the first candidate column.

In this embodiment of this application, in a case that the second input is a select input, the first target candidate item may be combined with the first one of the first candidate item, or the first target candidate item may be combined with each first candidate item, to form the third candidate item, and the third candidate item is displayed in the first candidate column, so that a corresponding associative word can be displayed in the second candidate column, and the user does not need to further perform an input to obtain a different associative word that is more in line with a user requirement, thereby improving user input efficiency.

In some embodiments of this application, in a case that the second input is a drag input, the receiving a first input performed by the user on a first target candidate item in the second candidate column may include:
receiving a drag input performed by the user to drag the first target candidate item to a first location in the first candidate column; and
the displaying a third candidate item in the first candidate column in response to the first input includes:
   displaying, in the first candidate column in response to the drag input, a candidate item formed by combining the second target candidate item with the first target candidate item.

The drag input may be an input for dragging the first target candidate item.

It can be understood that the first location is a location corresponding to the second target candidate item in the first candidate column.

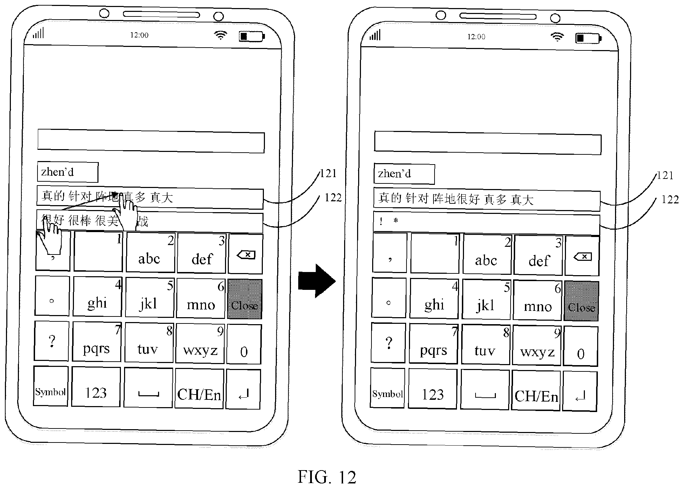

In an example, as shown in FIG. 12, when the user inputs a first string "zhend" on the input method interface, because the first string input by the user does not include a preset segmentation symbol, first candidate items " 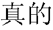 " (zhe̅n de), " 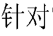 " (zhe̅n dui), " 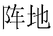 " (zhèn di), " 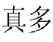 " (zhe̅n duo̅), and " 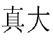 " (zhe̅n dà) corresponding to the first string may be displayed on a first candidate column 121, and first associative candidate items such as " 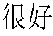 " (hěn hǎo), " 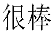 " (hěn bàng), " 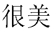 " (hěn měi), " 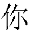 " (nǐ), and " 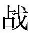 " (zhàn) corresponding to the first candidate items are displayed in a second candidate column 122. When the user drags " 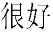 " (hěn hǎo) (that is, the first target candidate item) in the second candidate column to the first candidate item " 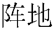 " (zhèn di) in the first candidate column (" 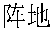 " (zhèn di) is the second target candidate item, and a location of the second target candidate item is the first location), " 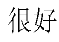 " (hěn hǎo) is combined with " 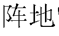 " (zhèn di) in the first candidate column to form the " 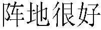 " (zhèn di hěn hǎo).

In this embodiment of this application, in a case that the second input is a drag input, the first target candidate item may be combined with any first candidate item in the first candidate column, so that the user can drag the first target candidate item to any first candidate item in the first candidate column based on a requirement, to obtain the required third candidate item, thereby improving user experience.

In some embodiments of this application, to further improve input efficiency of the user, after step 120, the information display method may further include:
receiving a second input performed by the user on a third target candidate item in the first candidate column; and
in response to the second input, displaying the third target candidate item on a screen, displaying a fourth candidate item in the first candidate column, and displaying a third associative candidate item corresponding to the fourth candidate item in the second candidate column.

The third target candidate item may be one of the first candidate items.

The second input may be performed by display the third target candidate item on the screen, display the fourth candidate item in the first candidate column, and display the third associative candidate item corresponding to the fourth candidate item in the second candidate column. The second input may be but is not limited to a touch input, a voice input, a gesture input, or another possible input, or may be a combination of at least two of the foregoing inputs. This is not limited herein.

In some embodiments of this application, in a case that the second input is a touch input, the second input may be specifically but is not limited to a tap input, a double-tap input, a slide input, or a fill-in input on the first target candidate item in the second candidate column, or may be a combination of at least two of the foregoing inputs. This is not limited herein.

The fourth candidate item may be a candidate item formed by moving the second candidate item to the first candidate column.

The third associative candidate item may be an associative word or an associative symbol corresponding to the fourth candidate item.

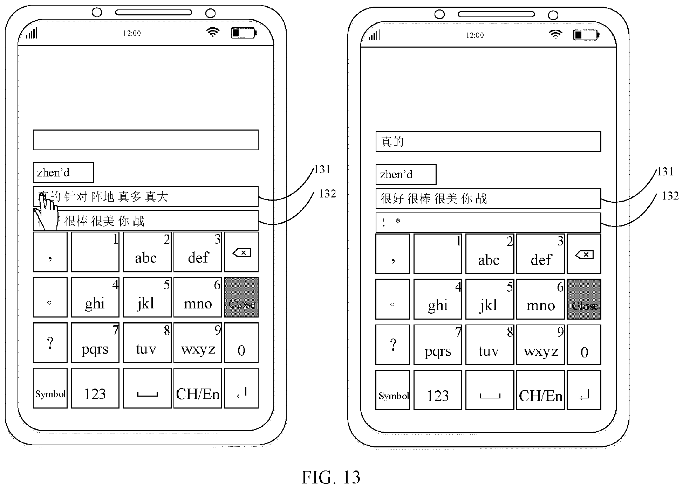

In an example, as shown in FIG. 13, when the user inputs a first string "zhend" on the input method interface, first candidate items " 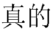 " (zhe̅n de), " 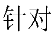 " (zhe̅n dui), " 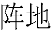 " (zhèn di), " 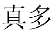 " (zhe̅n duo̅), and " 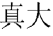 " (zhe̅n dà) corresponding to the first string may be displayed in a first candidate column 131, and first associative candidate items such as " 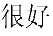 " (hěn hǎo), " 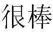 " (hěn bàng), " 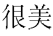 " (hěn měi), " 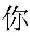 " (nǐ), and " 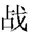 " (zhàn) corresponding to the first candidate items are displayed in a second candidate column 132. When the user taps " 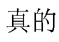 " (zhe̅n de) in the first candidate column (" 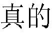 " (zhe̅n de) is the third target candidate item), " 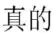 " (zhe̅n de) may be displayed on the screen, then the first associative candidate items " 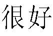 " (hěn hǎo), " 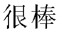 " (hěn bàng), " 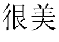 " (hěn měi), " 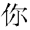 " (nǐ), and " 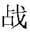 " (zhàn) previously displayed in the second candidate column are moved to the first candidate column, and third associative candidate items "!" and " *" of the first associative candidate items " 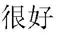 " (hěn hǎo), " 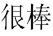 " (hěn bàng), " 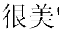 " (hěn měi), " 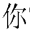 " (nǐ), and " 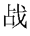 " (zhàn) are displayed in the second candidate column.

In this embodiment of this application, the second input performed by the user on the third target candidate item in the first candidate column is received, and in response to the second input, the third target candidate item is displayed on the screen, the fourth candidate item is displayed in the first candidate column, and the third associative candidate item corresponding to the fourth candidate item is displayed in the second candidate column. In this way, after the third target candidate item is displayed on the screen, the fourth candidate item may be further displayed in the first candidate column, and the third associative candidate item corresponding to the fourth candidate item is displayed in the second candidate column. Therefore, the user may directly select a required a candidate item by tapping the fourth candidate item and the third associative candidate item, and does not need to input a string again, so that operations are simple, thereby improving input efficiency of the user.

It should be noted that the foregoing application scenes described in the embodiments of this application are to describe the technical solutions in the embodiments of this application more clearly, and do not constitute a limitation on the technical solutions provided in the embodiments of this application. A person of ordinary skill in the art may learn that, as a new application scene appears, the technical solutions provided in the embodiments of this application are also applicable to a similar technical problem.

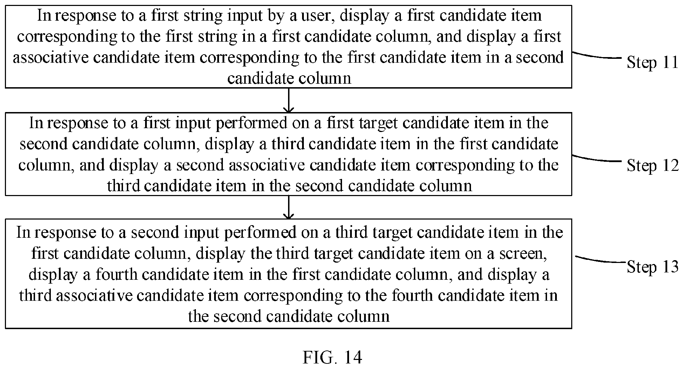

The following describes in detail the information display method provided in the embodiments of this application with reference to a specific scene. FIG. 14 is a schematic flowchart of an information display method according to an embodiment of this application. The information display method is for a scene in which a first string does not include a preset segmentation symbol.

As shown in FIG. 14, the information display method provided in this embodiment of this application may include step 11 to step 13.

Step 11: In response to a first string input by a user, display a first candidate item corresponding to the first string in a first candidate column, and display a first associative candidate item corresponding to the first candidate item in a second candidate column.

Step 12: In response to a first input performed on a first target candidate item in the second candidate column, display a third candidate item in the first candidate column, and display a second associative candidate item corresponding to the third candidate item in the second candidate column.

Step 13: In response to a second input performed on a third target candidate item in the first candidate column, display the third target candidate item on a screen, display a fourth candidate item in the first candidate column, and display a third associative candidate item corresponding to the fourth candidate item in the second candidate column.

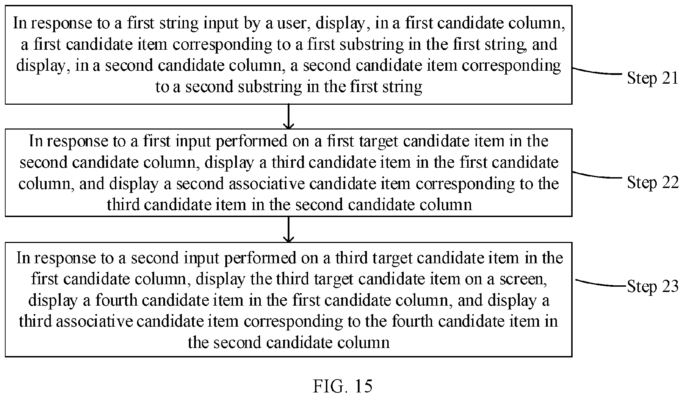

The following describes in detail the information display method provided in the embodiments of this application with reference to a specific scene. FIG. 15 is a schematic flowchart of an information display method according to an embodiment of this application. The information display method is for a scene in which a first string includes a preset segmentation symbol.

As shown in FIG. 15, the information display method provided in this embodiment of this application may include step 21 to step 23.

Step 21: In response to a first string input by a user, display, in a first candidate column, a first candidate item corresponding to a first substring in the first string, and display, in a second candidate column, a second candidate item corresponding to a second substring in the first string.

Step 22: In response to a first input performed on a first target candidate item in the second candidate column, display a third candidate item in the first candidate column, and display a second associative candidate item corresponding to the third candidate item in the second candidate column.

Step 23: In response to a second input performed on a third target candidate item in the first candidate column, display the third target candidate item on a screen, display a fourth candidate item in the first candidate column, and display a third associative candidate item corresponding to the fourth candidate item in the second candidate column.

It should be noted that, the information display method provided in the embodiments of this application may be performed by an information display apparatus, or a control module that is in the information display apparatus and that is configured to perform the information display method. In the embodiments of this application, an example in which the information display apparatus performs the information display method is used to describe the information display apparatus provided in the embodiments of this application.

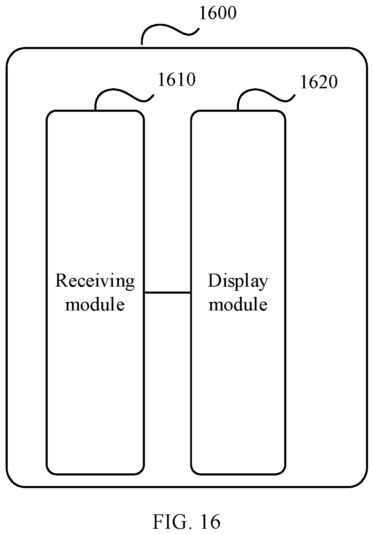

Based on a same invention concept as the foregoing information display method, this application further provides an information display apparatus, and the information display apparatus is applied to an electronic device. The following describes in detail the information display apparatus provided in this embodiment of this application with reference to FIG. 16.

FIG. 16 is a structural block diagram of an information display apparatus according to an example embodiment.

As shown in FIG. 16, the information processing apparatus may include:
a receiving module 1610, configured to receive a first string input by a user; and
a display module 1620, configured to: display a first candidate item in a first candidate column, and display a second candidate item in a second candidate column, where the first candidate item is a candidate item corresponding to the first string, and the second candidate item is a first associative candidate item that matches the first candidate item; or the first candidate item is a candidate item corresponding to a first substring in the first string, the second candidate item is a candidate item corresponding to a second substring in the first string, and the first string includes the first substring and the second substring.

In this embodiment of this application, the receiving module receives the first string input by the user, and the display module displays the first candidate item corresponding to the first string in the first candidate column, and displays the first associative candidate item that matches the first candidate item in the second candidate column. In this way, not only the first candidate item corresponding to the first string is provided for the user, but also the first associative candidate item that matches the first candidate item is provided for the user. Therefore, the user may directly select the first candidate item and/or the first associative candidate item from different candidate columns. Alternatively, the display module may display the candidate item corresponding to the first substring in the first string in the first candidate column, and display the candidate item corresponding to the second substring in the first string in the second candidate column. In this way, candidate items corresponding to the first string can be separately displayed in a plurality of candidate columns, more candidate items are displayed, and more candidate items are provided for the user, so that the user can directly select a required candidate item from the plurality of candidate columns. According to the solution in this embodiment of this application, more candidate items can be displayed in a simple operation manner, and an associative candidate item corresponding to a candidate item can be further displayed, so that more candidate options are provided for the user, thereby improving input efficiency of the user.

In some embodiments of this application, in a case that the first string does not include a preset segmentation symbol, the first candidate item is the candidate item corresponding to the first string, and the second candidate item is the first associative candidate item that matches the first candidate item; or
in a case that the first string includes a preset segmentation symbol, the first candidate item is the candidate item corresponding to the first substring in the first string, and the second candidate item is the candidate item corresponding to the second substring in the first string, where the first substring is a string before a preset segmentation symbol at a preset location in the first string, and the second substring is a string after the preset segmentation symbol at the preset location.

In some embodiments of this application, to further improve user experience, there are M preset segmentation symbols, and the display module 1620 is specifically configured to:
display the first candidate item in the first candidate column, where the first candidate item is a candidate item corresponding to a string before the first one of the preset segmentation symbols in the first string; and
separately display second candidate items in M sub-candidate columns, where the second candidate column includes the M sub-candidate columns, and a candidate item corresponding to a string between two adjacent preset segmentation symbols is displayed in each sub-candidate column, where M is a positive integer greater than 1.

In some embodiments of this application, to further facilitate user operation and improve user experience, the receiving module 1610 may be further configured to receive a first input performed by the user on a first target candidate item in the second candidate column, where the first target candidate item is one of the second candidate items.

The display module 1620 may be further configured to: in response to the first input, display a third candidate item in the first candidate column, and display a second associative candidate item corresponding to the third candidate item in the second candidate column, where the third candidate item is a candidate item formed by combining the first target candidate item with the first candidate item.

In some embodiments of this application, the receiving module 1610 may be specifically configured to: in a case that the second input is a select input, receive a select input performed by the user on the first target candidate item in the second candidate column.

The display module 1620 may be specifically configured to:
display, in the first candidate column in response to the select input, a candidate item formed by combining the first target candidate item with the first one of the first candidate item;
   or
display, in the first candidate column in response to the select input, a candidate item formed by combining the first target candidate item with each of the first candidate items.

In some embodiments of this application, the receiving module 1610 may be specifically configured to: in a case that the second input is a drag input, receive a drag input performed by the user to drag the first target candidate item to a first location in the first candidate column, where the first location is a location corresponding to a second target candidate item in the first candidate column.

The display module 1620 may be specifically configured to:
display, in the first candidate column in response to the drag input, a candidate item formed by combining the second target candidate item with the first target candidate item. In some embodiments of this application, to further improve input efficiency of the user, the receiving module 1610 may be further configured to receive a second input performed by the user on a third target candidate item in the first candidate column, where the third target candidate item is one of the first candidate items.

The display module 1620 may be further configured to: in response to the second input, display the third target candidate item on a screen, display a fourth candidate item in the first candidate column, and display a third associative candidate item corresponding to the fourth candidate item in the second candidate column, where the fourth candidate item is a candidate item formed by moving the second candidate item to the first candidate column.

The information display apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, or a personal digital assistant (personal digital assistant, PDA). The non-mobile electronic device may be a server, a network attached storage (Network Attached Storage, NAS), a personal computer (personal computer, PC), a television (television, TV), a teller machine, or a self-service machine. This is not specifically limited in this embodiment of this application.

The information display apparatus in this embodiment of this application may be an apparatus with an operating system. The operating system may be an Android (Android) operating system, an iOS operating system, or another possible operating system. This is not specifically limited in this embodiment of this application.

The information display apparatus provided in this embodiment of this application can implement the processes implemented in the method embodiments shown in FIG. 1 to FIG. 15. To avoid repetition, details are not described herein again.

An embodiment of the present invention further provides an electronic device, configured to perform the processes of the foregoing information display method embodiment, and a same technical effect can be achieved. To avoid repetition, details are not described herein again.

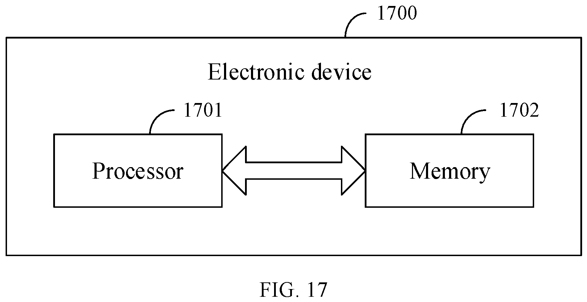

Optionally, as shown in FIG. 17, an embodiment of this application further provides an electronic device 1700, including a processor 1701, a memory 1702, and a program or an instruction that is stored in the memory 1702 and that can be run on the processor 1701. The program or the instruction is executed by the processor 1701 to implement the processes of the foregoing information display method embodiment, and a same technical effect can be achieved. To avoid repetition, details are not described herein again.

It should be noted that the electronic device in this embodiment of this application includes the mobile electronic device and the non-mobile electronic device.

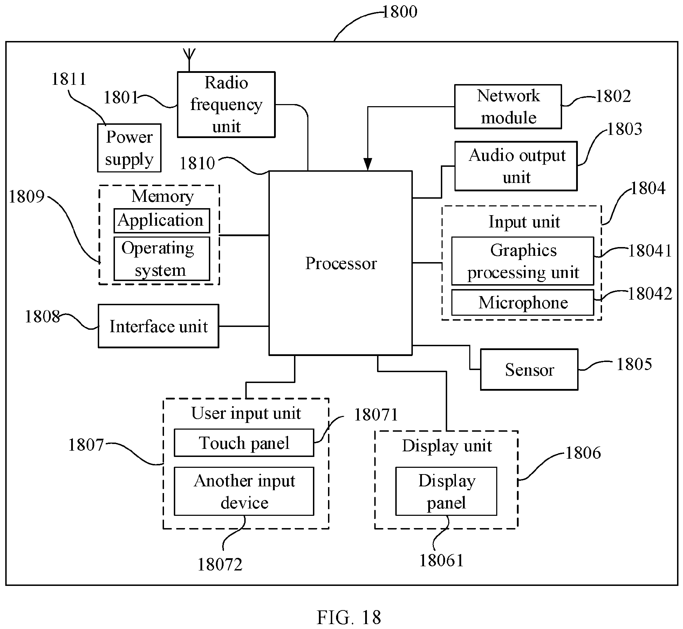

FIG. 18 is a schematic diagram of a hardware structure of an electronic device according to an embodiment of this application.

An electronic device 1800 includes but is not limited to components such as a radio frequency unit 1801, a network module 1802, an audio output unit 1803, an input unit 1804, a sensor 1805, a display unit 1806, a user input unit 1807, an interface unit 1808, a memory 1809, and a processor 1810.

A person skilled in the art can understand that the electronic device 1800 may further include the power supply (for example, a battery) that supplies power to each component. The power supply may be logically connected to the processor 1810 by using a power supply management system, so as to manage functions such as charging, discharging, and power consumption by using the power supply management system. The structure of the electronic device shown in FIG. 18 does not constitute a limitation on the electronic device, and the electronic device may include more or fewer components than those shown in the figure, or combine some components, or have different component arrangements. Details are not described herein again.

The user input unit 1807 is configured to receive a first string input by a user.

The display unit 1806 is configured to: display a first candidate item in a first candidate column, and display a second candidate item in a second candidate column, where the first candidate item is a candidate item corresponding to the first string, and the second candidate item is a first associative candidate item that matches the first candidate item; or the first candidate item is a candidate item corresponding to a first substring in the first string, the second candidate item is a candidate item corresponding to a second substring in the first string, and the first string includes the first substring and the second substring.

In this way, the first string input by the user is received, the first candidate item corresponding to the first string is displayed in the first candidate column, and the first associative candidate item that matches the first candidate item is displayed in the second candidate column. In this way, not only the first candidate item corresponding to the first string is provided for the user, but also the first associative candidate item that matches the first candidate item is provided for the user. Therefore, the user may directly select the first candidate item and/or the first associative candidate item from different candidate columns. Alternatively, the candidate item corresponding to the first substring in the first string may be displayed in the first candidate column, and the candidate item corresponding to the second substring in the first string may be displayed in the second candidate column. In this way, candidate items corresponding to the first string can be separately displayed in a plurality of candidate columns, more candidate items are displayed, and more candidate items are provided for the user, so that the user can directly select a required candidate item from the plurality of candidate columns. According to the solution in this embodiment of this application, more candidate items can be displayed in a simple operation manner, and an associative candidate item corresponding to a candidate item can be further displayed, so that more candidate options are provided for the user, thereby improving input efficiency of the user.

Optionally, in a case that the first string does not include a preset segmentation symbol, the first candidate item is the candidate item corresponding to the first string, and the second candidate item is the first associative candidate item that matches the first candidate item; or in a case that the first string includes a preset segmentation symbol, the first candidate item is the candidate item corresponding to the first substring in the first string, and the second candidate item is the candidate item corresponding to the second substring in the first string, where the first substring is a string before a preset segmentation symbol at a preset location in the first string, and the second substring is a string after the preset segmentation symbol at the preset location.

Optionally, there are M preset segmentation symbols, and the display unit 1806 may be further configured to: display the first candidate item in the first candidate column, where the first candidate item is a candidate item corresponding to a string before the first one of the preset segmentation symbols in the first string; and separately display second candidate items in M sub-candidate columns, where the second candidate column includes the M sub-candidate columns, and a candidate item corresponding to a string between two adjacent preset segmentation symbols is displayed in each sub-candidate column, where M is a positive integer greater than 1.

Optionally, the user input unit 1807 may be further configured to receive a first input performed by the user on a first target candidate item in the second candidate column, where the first target candidate item is one of the second candidate items.

Optionally, the display unit 1806 may be further configured to: in response to the first input, display a third candidate item in the first candidate column, and display a second associative candidate item corresponding to the third candidate item in the second candidate column, where the third candidate item is a candidate item formed by combining the first target candidate item with the first candidate item.

In this way, the first input performed by the user on the first target candidate item in the second candidate column is received, and in response to the first input, the third candidate item is displayed in the first candidate column, and the second associative candidate item corresponding to the third candidate item is displayed in the second candidate column. In this way, through the first input performed by the user on the first target candidate item, the first target candidate item may be combined with the first candidate item in the first candidate column to obtain the third candidate item. Therefore, when selecting candidate items, the user does not need to select the first candidate item in the first candidate column and then select the second candidate item in the second candidate column one by one, so that operations are simple, thereby improving input efficiency of the user.

Optionally, in a case that the second input is a select input, the user input unit 1807 may be further configured to receive a select input performed by the user on the first target candidate item in the second candidate column.

Correspondingly, the display unit 1806 may be further configured to display, in the first candidate column in response to the select input, a candidate item formed by combining the first target candidate item with the first one of the first candidate item; or display, in the first candidate column in response to the select input, a candidate item formed by combining the first target candidate item with each of the first candidate items.

In this way, in a case that the second input is a select input, the candidate item formed by combining the first target candidate item with the first candidate item may be displayed in the first candidate column in response to the select input performed by the user on the first target candidate item in the second candidate column; or the candidate item formed by combining the first target candidate item with the first one of the first candidate item is displayed in the first candidate column in response to the select input. In this way, through the select input performed on the first target candidate item, the first target candidate item may be combined with the first one of the first candidate item, or the first target candidate item may be combined with each first candidate item, and the user can obtain the combination of the first target candidate item and the first one of the first candidate item without a need to select the first target candidate item and the first one of the first candidate item one by one (or can obtain the combination of the first target candidate item and each first candidate item without a need to select the first target candidate item and each first candidate item one by one), so that operations are simple, thereby improving input efficiency of the user.

Optionally, in a case that the second input is a drag input, the user input unit 1807 may be further configured to receive a drag input performed by the user to drag the first target candidate item to a first location in the first candidate column, where the first location is a location corresponding to a second target candidate item in the first candidate column.

Correspondingly, the display unit 1806 may be further configured to display, in the first candidate column in response to the drag input, a candidate item formed by combining the second target candidate item with the first target candidate item.

In this way, in a case that the second input is a drag input, the candidate item formed by combining the second target candidate item with the first target candidate item may be displayed in the first candidate column in response to the drag input performed by the user to drag the first target candidate item to the first location in the first candidate column. In this way, through the drag input performed on the first target candidate item, the first target candidate item may be combined with any first candidate item in the first candidate column. Therefore, the user may drag the first target candidate item to any first candidate item in the first candidate column based on a requirement, to obtain the required third candidate item, thereby improving user experience. In addition, the user can obtain the combination of the first target candidate item and the first candidate item without a need to select the first target candidate item and the first candidate item one by one, so that operations are simple, thereby improving input efficiency of the user.

Optionally, the user input unit 1807 may be further configured to receive a second input performed by the user on a third target candidate item in the first candidate column, where the third target candidate item is one of the first candidate items.

Optionally, the display unit 1806 may be further configured to: in response to the second input, display the third target candidate item on a screen, display a fourth candidate item in the first candidate column, and display a third associative candidate item corresponding to the fourth candidate item in the second candidate column, where the fourth candidate item is a candidate item formed by moving the second candidate item to the first candidate column.

In this way, the second input performed by the user on the third target candidate item in the first candidate column is received, and in response to the second input, the third target candidate item is displayed on the screen, the fourth candidate item is displayed in the first candidate column, and the third associative candidate item corresponding to the fourth candidate item is displayed in the second candidate column. In this way, after the third target candidate item is displayed on the screen, the fourth candidate item may be further displayed in the first candidate column, and the third associative candidate item corresponding to the fourth candidate item is displayed in the second candidate column. Therefore, the user may directly select a required a candidate item by tapping the fourth candidate item and the third associative candidate item, and does not need to input a string again, so that operations are simple, thereby improving input efficiency of the user.

It should be understood that, in this embodiment of this application, the input unit 1804 may include a graphics processing unit (Graphics Processing Unit, GPU) 18041 and a microphone 18042, and the graphics processing unit 18041 processes image data of a still image or a video that is obtained by an image capturing apparatus (for example, a camera) in a video capturing mode or an image capturing mode. The display unit 1806 may include a display panel 18061. The display panel 18061 may be configured in a form such as a liquid crystal display or an organic light-emitting diode. The user input unit 1807 may include a touch panel 18071 and another input device 18072. The touch panel 18071 is also referred to as a touchscreen. The touch panel 18071 may include two parts: a touch detection apparatus and a touch controller. The another input device 18072 may include but is not limited to a physical keyboard, a functional button (such as a volume control button or a power on/off button), a trackball, a mouse, and a joystick. Details are not described herein. The memory 1809 may be configured to store a software program and various data, including but not limited to an application and an operating system. An application processor and a modem processor may be integrated into the processor 1810, the application processor mainly processes an operating system, a user interface, an application program, and the like, and the modem processor mainly processes wireless communication. It can be understood that, alternatively, the modem processor may not be integrated into the processor 1810.

An embodiment of this application further provides a readable storage medium. The readable storage medium stores a program or an instruction, and the program or the instruction is executed by a processor to implement the processes in the foregoing information display method embodiment, and a same technical effect can be achieved. To avoid repetition, details are not described herein again.

The processor is a processor in the electronic device in the foregoing embodiment. The readable storage medium includes a computer readable storage medium, for example, a read-only memory (Read-Only Memory, ROM), a random access memory (Random Access Memory, RAM), a magnetic disk, or an optical disc.

An embodiment of the present invention further provides a computer program product. The computer program product may be executed by a processor to implement the processes of the foregoing information display method embodiment, and a same technical effect can be achieved. To avoid repetition, details are not described herein again.

An embodiment of this application further provides a chip. The chip includes a processor and a communication interface, the communication interface is coupled to the processor, and the processor is configured to run a program or an instruction to implement the processes of the foregoing information display method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of this application essentially or the part contributing to the related art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, a network device, or the like) to perform the methods described in the embodiments of this application.

The foregoing descriptions are merely preferred embodiments of this application, and are not intended to limit this application. For a person skilled in the art, various alterations and changes may be made in the embodiments of this application. Any modification, equivalent replacement, or improvement made without departing from the spirit and principle of this application shall fall within the protection scope of this application.

It should be understood by a person skilled in the art that the foregoing embodiments are merely exemplary rather than restrictive. Different technical features in different embodiments may be combined to achieve beneficial effects. On the basis of studying the accompanying drawings, the specifications, and the claims, a person skilled in the art shall be able to understand and implement other modified embodiments of the disclosed embodiments. In the claims, the term "include" does not exclude other apparatuses or steps; when an article is not modified with a quantifier, it is intended to include one/one type or a plurality of/a plurality of types of articles, and an article can be used interchangeably with "one/one type or a plurality of/a plurality of types of articles"; and the terms "first" and "second" are used to indicate names rather than to indicate any particular order. None of the reference signs in the claims shall be construed as a limitation on the protection scope. A plurality of functions in the claims may be implemented by a single hardware or software module. Some technical features in different dependent claims do not mean that these technical features cannot be combined to achieve beneficial effects.

## Claims

1. An information display method, comprising:
receiving a first string input by a user; and
displaying a first candidate item in a first candidate column, and displaying a second candidate item in a second candidate column, wherein
the first candidate item is a candidate item corresponding to the first string, and the second candidate item is a first associative candidate item that matches the first candidate item;
or
the first candidate item is a candidate item corresponding to a first substring in the first string, the second candidate item is a candidate item corresponding to a second substring in the first string, and the first string comprises the first substring and the second substring.

2. The method according to claim 1, wherein
in a case that the first string does not comprise a preset segmentation symbol, the first candidate item is the candidate item corresponding to the first string, and the second candidate item is the first associative candidate item that matches the first candidate item;
or
in a case that the first string comprises a preset segmentation symbol, the first candidate item is the candidate item corresponding to the first substring in the first string, and the second candidate item is the candidate item corresponding to the second substring in the first string, wherein the first substring is a string before a preset segmentation symbol at a preset location in the first string, and the second substring is a string after the preset segmentation symbol at the preset location.

3. The method according to claim 2, wherein there are M preset segmentation symbols, and the displaying a first candidate item in a first candidate column, and displaying a second candidate item in a second candidate column comprises:
displaying the first candidate item in the first candidate column, wherein the first candidate item is a candidate item corresponding to a string before the first one of the preset segmentation symbols in the first string; and
separately displaying second candidate items in M sub-candidate columns, wherein the second candidate column comprises the M sub-candidate columns, and a candidate item corresponding to a string between two adjacent preset segmentation symbols is displayed in each sub-candidate column, wherein
M is a positive integer greater than 1.

4. The method according to claim 1, wherein after the displaying a first candidate item in a first candidate column, and displaying a second candidate item in a second candidate column, the method further comprises:
receiving a first input performed by the user on a first target candidate item in the second candidate column, wherein the first target candidate item is one of the second candidate items; and
in response to the first input, displaying a third candidate item in the first candidate column, and displaying a second associative candidate item corresponding to the third candidate item in the second candidate column, wherein
the third candidate item is a candidate item formed by combining the first target candidate item with the first candidate item.

5. The method according to claim 4, wherein in a case that the first input is a select input, the receiving a first input performed by the user on a first target candidate item in the second candidate column comprises:
receiving a select input performed by the user on the first target candidate item in the second candidate column; and
the displaying a third candidate item in the first candidate column in response to the first input comprises:
displaying, in the first candidate column in response to the select input, a candidate item formed by combining the first target candidate item with the first one of the first candidate item;
or
displaying, in the first candidate column in response to the select input, a candidate item formed by combining the first target candidate item with each of the first candidate items.

6. The method according to claim 4, wherein in a case that the first input is a drag input, the receiving a first input performed by the user on a first target candidate item in the second candidate column comprises:
receiving a drag input performed by the user to drag the first target candidate item to a first location in the first candidate column, wherein the first location is a location corresponding to a second target candidate item in the first candidate column; and
the displaying a third candidate item in the first candidate column in response to the first input comprises:
displaying, in the first candidate column in response to the drag input, a candidate item formed by combining the second target candidate item with the first target candidate item.

7. The method according to any one of claims 1 to 3, wherein after the displaying a first candidate item in a first candidate column, and displaying a second candidate item in a second candidate column, the method further comprises:
receiving a second input performed by the user on a third target candidate item in the first candidate column, wherein the third target candidate item is one of the first candidate items; and
in response to the second input, displaying the third target candidate item on a screen, displaying a fourth candidate item in the first candidate column, and displaying a third associative candidate item corresponding to the fourth candidate item in the second candidate column, wherein
the fourth candidate item is a candidate item formed by moving the second candidate item to the first candidate column.

8. An information display apparatus, comprising:
a receiving module, configured to receive a first string input by a user; and
a display module, configured to: display a first candidate item in a first candidate column, and display a second candidate item in a second candidate column, wherein the first candidate item is a candidate item corresponding to the first string, and the second candidate item is a first associative candidate item that matches the first candidate item; or the first candidate item is a candidate item corresponding to a first substring in the first string, the second candidate item is a candidate item corresponding to a second substring in the first string, and the first string comprises the first substring and the second substring.

9. The apparatus according to claim 8, wherein
in a case that the first string does not comprise a preset segmentation symbol, the first candidate item is the candidate item corresponding to the first string, and the second candidate item is the first associative candidate item that matches the first candidate item;
or
in a case that the first string comprises a preset segmentation symbol, the first candidate item is the candidate item corresponding to the first substring in the first string, and the second candidate item is the candidate item corresponding to the second substring in the first string, wherein the first substring is a string before a preset segmentation symbol at a preset location in the first string, and the second substring is a string after the preset segmentation symbol at the preset location.

10. The apparatus according to claim 9, wherein there are M preset segmentation symbols, and the display module is specifically configured to:
display the first candidate item in the first candidate column, wherein the first candidate item is a candidate item corresponding to a string before the first one of the preset segmentation symbols in the first string; and
separately display second candidate items in M sub-candidate columns, wherein the second candidate column comprises the M sub-candidate columns, and a candidate item corresponding to a string between two adjacent preset segmentation symbols is displayed in each sub-candidate column, wherein M is a positive integer greater than 1.

11. The apparatus according to claim 8, wherein
the receiving module is further configured to receive a first input performed by the user on a first target candidate item in the second candidate column, wherein the first target candidate item is one of the second candidate items; and
the display module is further configured to: in response to the first input, display a third candidate item in the first candidate column, and display a second associative candidate item corresponding to the third candidate item in the second candidate column, wherein the third candidate item is a candidate item formed by combining the first target candidate item with the first candidate item.

12. The apparatus according to claim 11, wherein
the receiving module is specifically configured to: in a case that the second input is a select input, receive a select input performed by the user on the first target candidate item in the second candidate column; and
the display module is specifically configured to:
display, in the first candidate column in response to the select input, a candidate item formed by combining the first target candidate item with the first one of the first candidate item;
or
display, in the first candidate column in response to the select input, a candidate item formed by combining the first target candidate item with each of the first candidate items.

13. The apparatus according to claim 11, wherein
the receiving module is specifically configured to: in a case that the second input is a drag input, receive a drag input performed by the user to drag the first target candidate item to a first location in the first candidate column, wherein the first location is a location corresponding to a second target candidate item in the first candidate column; and
the display module is specifically configured to:
display, in the first candidate column in response to the drag input, a candidate item formed by combining the second target candidate item with the first target candidate item.

14. The apparatus according to any one of claims 8 to 10, wherein
the receiving module is further configured to receive a second input performed by the user on a third target candidate item in the first candidate column, wherein the third target candidate item is one of the first candidate items; and
the display module is configured to: in response to the second input, display the third target candidate item on a screen, display a fourth candidate item in the first candidate column, and display a third associative candidate item corresponding to the fourth candidate item in the second candidate column, wherein the fourth candidate item is a candidate item formed by moving the second candidate item to the first candidate column.

15. An electronic device, comprising a processor, a memory, and a program or an instruction that is stored in the memory and that can be run on the processor, wherein the program or the instruction is executed by the processor to implement the steps of the information display method according to any one of claims 1 to 7.

16. An electronic device, configured to perform the steps of the information display method according to any one of claims 1 to 7.

17. A readable storage medium, wherein a program or an instruction is stored on the readable storage medium, and the program or the instruction is executed by a processor to implement the steps of the information display method according to any one of claims 1 to 7.

18. A computer program product, wherein the computer program product may be executed by a processor to implement the steps of the information display method according to any one of claims 1 to 7.

19. A chip, wherein the chip comprises a processor and a communication interface, the communication interface is coupled to the processor, the processor is configured to run a program or an instruction, and the program or the instruction is executed by the processor to implement the steps of the information display method according to any one of claims 1 to 7.
